# EUROPEAN PATENT SPECIFICATION

(11) **EP 1 929 881 B1**
(45) Date of publication and mention of the grant of the patent: **06.11.2019**
(21) Application number: 06798434.4
(22) Date of filing: 28.09.2006
(51) Int. Cl.: A23C 9/154

(54) **EMULSION COMPOSITION AND METHOD OF PREPARING THE SAME**
EMULSIONSZUSAMMENSETZUNG UND VERFAHREN ZUR HERSTELLUNG DAVON
COMPOSITION D'ÉMULSION ET PROCÉDÉ DE PRÉPARATION DE CELLE-CI

(30) Priority: 28.09.2005 JP 2005283058; 13.03.2006 JP 2006067317; 28.06.2006 JP 2006177592
(43) Date of publication of application: 11.06.2008
(73) Proprietor: SAN-EI GEN F.F.I., INC., Toyonaka-shi, Osaka 561-8588 (JP)
(72) Inventor: HIROE, Mika, Toyonaka-shi Osaka 561-8588 (JP); KATAOKA, Yohei, Toyonaka-shi Osaka 561-8588 (JP); FUNAMI, Takahiro, Toyonaka-shi Osaka 561-8588 (JP); KONDA, Takashi, Toyonaka-shi Osaka 561-8588 (JP); TOMITA, Chihiro, Toyonaka-shi Osaka 561-8588 (JP); TOYOIZUMI, Satoshi, Toyonaka-shi Osaka 561-8588 (JP); HOSOMI, Tomohiro, Toyonaka-shi Osaka 561-8588 (JP); ISHIHARA, Sayaka, Toyonaka-shi Osaka 561-8588 (JP)
(74) Representative: Müller-Boré & Partner Patentanwälte PartG mbB
(86) International application number: PCT/JP2006/319386
(87) International publication number: WO 2007/037347

(56) References cited:
- EP-A- 0 888 776
- EP-A- 1 889 853
- WO-A-02/14374
- JP-A- 03 197 502
- JP-A- 07 184 565
- JP-A- 10 155 432
- JP-A- 2000 273 101
- JP-A- 2004 503 613
- JP-A- 2005 261 430
- US-A- 2 518 510
- DEA I C M ET AL: "ACETYLATED PECTIC POLYSACCHARIDES OF SUGAR BEET" FOOD HYDROCOLLOIDS, IRL PRESS, OXFORD, GB, vol. 1, no. 1, 1 January 1986 (1986-01-01), pages 71-88, XP000573548

## Description

The present invention relates to a method of preparing emulsified compositions, especially emulsified foods. The present invention also relates to emulsified compositions prepared by the method.

Conventionally, various food hydrocolloids have been used for the purpose of improving qualities of foods, such as physical properties, stability, dispersibility, and emulsifiability, and dietary fiber fortification. Food hydrocolloids mainly refer to proteins and polysaccharides dispersed in water with a particle diameter of about 1 µm or less that are present with food matrix. Since food hydrocolloids have specific physical properties, viscosities, and gelling properties, the hydrocolloids are useful not only as food materials but also as additives to improve the physical properties and functions of foods in a small amount. Texture, which is one of the most important attributes that influences the palatability of foods, is closely related to the physical properties of foods. In this sense, food hydrocolloids that are capable of controlling physical properties of foods are also referred to as texture modifiers. Recently, the application area of food hydrocolloids has been expanding, including nursery foods designed for people who have difficulty in chewing and swallowing. In these foods, the hydrocolloids function to adjust the hardness and to improve swallowing ease, for example.

Among food hydrocolloids, polysaccharides are derived from various sources, and also have diverse functions. Polysaccharides are extracted from seeds, rhizomes, tree exudate, fruits, seaweeds, microorganisms. Reprensentatives derived from each of the above mentioned source include: guar gum, tara gum, locust-bean-gum, water-soluble soybean-polysaccharides, tamarind seed gum, and psyllium seed gum from seeds; konjac, glucomannan, and starch from rhizomes; gum arabic, tragacanth gum, karaya gum, and ghatti gum from exudate; pectins from fruits; agar, carrageenan, alginic acid, and alginate from sea weeds; xanthan gum, gellant gum, pullulan and curdlan from microorganisms.

Among food hydrocolloids, pectin is an acid polysaccharide comprising α-D-galacturonic acid as a main chain component. Pectin is most widely used as a gelling agent for jellies and other confectioneries, and jams, or as a stabilizer for acidified milk beverages. However, to expand the application area of cosmetics and pharmaceuticals, also to new technology should be necessary to provide pectin with a novel texture and advanced functionality with handing ease.

For the above-described objects, a method of dissolving or dispersing pectin in water, adding an organic acid, and heating the resultant under normal or high pressure, thereby modifying pectin has been proposed (Patent Document 1). It is also known that a pectin component obtained by treating pectin with hot water underacidic conditions at temperatures of 100°C (exclusive) to 150°C (inclusive) is useful as a dispersion stabilizer capable of stably dispersing solid matter in a dispersion media (Patent Document 2). However, these methods involve heating pectin in the presence of water under acid conditions at a high pressure or high temperature, and therefore the methods require pH adjustment and pressurization treatment, which disadvantageously complicates production processes.

With respect to heat treatment of pectin, Patent Document 3 discloses, as a method of sterilizing water-soluble polysaccharide powders such as pectin, a method of dispersing water-soluble polysaccharide powders in a poor solvent in which the powders cannot be solubilized, bringing the result into contact with an oxidizing disinfectant, at a heating temperature of 50 to 95°C for 30 minutes to 5 hours. However, this method is for sterilizing pectin. Patent Document 3 discloses obtaining foods with favorable storage properties that are free from bacterial contamination by the use of a pectin sterilized by the above-described method. However, Patent Document 3 does not refer to the influences exerted on emulsifying activity and emulsion stability of the water-soluble polysaccharide powders obtained by the above-described method.
[Patent-Document 1] Japanese Unexamined Patent Application Publication No. H10-155432
[Patent Document 2] Japanese Unexamined Patent Application Publication No. 2002-330710
[Patent Document 3] Japanese Unexamined Patent Application Publication No. H07-184565

An object of the present invention is to provide a method of preparing emulsion compositions having excellent emulsifying activity and emulsion stability, and particularly emulsion foods having good mouthfeel in addition to emulsifying activity and emulsion stability. Another object of the present invention is to provide a method of preparing emulsion compositions having heat resistance in addition to the above-mentioned emulsifying activity and emulsion stability. Still another object of the present invention is to provide emulsion compositions excellent in emulsifying activity and emulsion stability obtained by the above-described method and emulsion compositions having heat resistance in addition to emulsifying activity and emulsion stability.

It is conventionally known that pectin shows emulsifying properties. The present inventors found that when sugar beet pectin derived from sugar beet in the form of a powder is heated at a relative humidity of 20 to 90% at a temperature of 50 to 150 deg. C for 1 to 48 hours, the emulsifying properties are enhanced, and that emulsion compositions excellent in emulsifying activity and emulsion stability can be prepared using the sugar beet pectin as an emulsifier. The present inventors further found that, through the use of the modified pectin obtained by heat treatment, emulsion foods can be imparted not only emulsifying activity and emulsion stability equivalent to or higher than those obtained when animal emulsifiers, such as egg yolk, whey protein isolate, or synthetic emulsifiers that have been conventionally incorporated emulsion foods are used but also heat resistance without substantially changing the mouthfeel (smoothness, richness). The present inventors also found that the above-described effects can be further improved by homogenizing the modified pectin in water, mixing emulsion and subsequent emulsifying. The present invention has been accomplished based on these findings.

More specifically, the present invention relates to the following items:
1. A method of preparing emulsion compositions comprising:
   (a) homogenizing a modified pectin, in water systems, obtained by heating sugar beet pectin derived from sugar beet in powder form at a temperature of 50 to 150°C at a relative humidity of 20 to 90% for 1 to 48 hours;
   (b) mixing the water dispersion of modified pectin obtained in step (a) with raw materials for emulsion compositions; and
   emulsifying the mixture obtained in step (b).
2. A method of preparing emulsion compositions according to item 1, wherein a modified pectin obtained by heating sugar beet pectin derived from sugar beet in powder form at a temperature of 60 to 150°C at a relative humidity of 50 to 90% for 5 to 48 hours is used as a modified pectin.
3. A method according to item 1, which is a method for preparing oil-in-water type (O/W) emulsions, water-in-oil (W/O) emulsions, or multiple emulsified emulsions.
4. A method according to item 1 wherein the emulsion composition is food.
5. A method according to item 1, wherein the emulsion composition is any one selected from the group consisting of dressings, mayonnaises, coffee with milk, custards, and butter creams.
6. Emulsion composition prepared by a method of item 1.
7. Emulsion composition according to item 6, which is oil-in-water (O/W) emulsions, water-in-oil (W/O) emulsions, or multiple emulsified emulsions.
8. Emulsion composition according to item 6, wherein the emulsion composition is food.
9. Emulsion composition according to item 6, wherein the emulsion composition is any one selected from the group consisting of dressings, mayonnaises, coffee with milk, custards, and butter creams.
10. Use of water dispersions containing a modified pectin for preparing an emulsion composition;
   the modified pectin being obtained by heating sugar beet pectin derived from sugar beet in powder form at a temperature of 60 to 150°C at a relative humidity 50 to 90% for 5 to 48 hours;
   the water dispersions being obtained by homogenizing the modified pectin in water systems.

According to the present invention, through the use of sugar beet pectin modified (modified pectin) using moist heat treatment, which is a relatively moderate and safe physical treatment requiring no changes in the manufacturing processes or manufacturing conditions of foodstuffs, the emulsifying activity, emulsion stability, heat resistance, and texture of an emulsion composition (in particular emulsion foods) can be improved notably in comparison with an untreated sugar beet pectin (unmodified pectin). Moreover, the modified pectin can substitute animal material, such as egg yolk, and chemically synthesized emulsifiers that have been conventionally used for the purpose of emulsification, and allows preparation of an emulsion composition using with high commercial values natural botanical materials alone. Therefore, the modified pectin of the invention is remarkably useful in practical use particularly in foodstuffs. For example, excessive intake of cholesterol can be inhibited, and food manufacturing costs can be reduced.

### I. Method for Preparing an Emulsion Compositions

The method of preparing an emulsion composition of the present invention is characteristic in that sugar beet pectin modified (modified pectin) by moist heat treatment is used as an emulsifier.

### (1) Preparation of Modified Pectin

A modified pectin can be prepared by heating (moist heat treatment) sugar beet pectin in the form of a powder with humidity derived from sugar beet (Beta vulgaris LINNE var. rapa DUMORTIER) at a temperature of 50 to 150°C at a relative humidity of 20 to 90% for 1 to 48 hours.

Sugar beet pectin is one of the constituent polysaccharides of sugar beet pulp, and is composed of a backbone of α-1,4 linked poly-D-galactulonate, a side chain mainly comprising neutral sugars, such as arabinose, galactose, and proteins covalently bonded to the side chain. The average molecular weight is 400, 000 to 500, 000. It is a case that, β-L-rhamnose is insected estimated to be within the backbone. The backbone occupies about 40% of the whole polysaccharide, and D-galacturonic acid which is a dominant constitutional sugar of the backbone is partially acetylated and methyl-esterified. In the present invention, sugar beet pectin can be widely used irrespective of the contents of the acetyl group and the methylester group. Such sugar beet pectin is commercially available, and, for example, VIS TOP D-2250 (tradename, San-Ei Gen F.F.I., Inc.) can be mentioned. It should be noted that, unless otherwise specified, pectin refers to sugar beet pectin derived from sugar beet in this specification.

The particle diameter of sugar beet pectin in the powder form to be modified (hereinafter, also referred to as "raw material pectin" or "unmodified pectin") is not limited and, for example, a particle diameter of a 10-mesh screen or smaller can be mentioned, and a particle diameter of 1.7 mm or less can be specifically mentioned. It should be noted that the powdered pectin can be prepared using a method involving drying and pulverizing fibrous pectin precipitated by adding alcohol to pectin extract; a method involving spray drying pectin extract; a method involving pulverizing solid pectin into a powder form; a method involving freeze drying of frozen pectin in powder form.

As relative humidity conditions for the modification treatment (moist heat treatment), 20 to 90% can be mentioned and, as the temperature conditions, 50 to 150°C can be mentioned.

Usually, the modification treatment (moist heat treatment) can be performed by heating pectin in powder form for 1 to 48 hours in a temperature and humidity controlled incubator in which the relative humidity and the temperature fall within the above-mentioned range.

When pectin thus modified is used as an emulsifier the mean particle diameter of the oil droplets is smaller and more stable upon storage (high emulsifying activity and emulsion stability) in comparison with emulsion composition prepared using unmodified pectin. In this action mechanism, it is presumed that as a result of intermolecular or intramolecular interactions by heat treatment, via protein as a linker, the hydrophobicity of pectin increases, leading to increase surface activity.

It should be noted that the heat-treatment can also be performed under reduced pressure. There is no limitation on the reduced pressure, and, for example, 0.01 to 500 mmHg, preferably 0.01 to 300 mmHg, and more preferably 0.01 to 200 mmHg, can be mentioned.

### (2) Preparation of Emulsion Compositions

Target emulsion compositions of the present invention include an oil-in-water (O/W) emulsion, a water-in-oil (W/O) emulsion, and a multiple emulsified (O/W/O and W/O/W) emulsion.

Such emulsion compositions include foodstuffs, cosmetics, medical drugs, quasi-medical drugs, industrial goods, daily necessities, personal care goods, irrespective of the field or type, preferably foodstuffs, cosmetics, medical drugs, and quasi-medical drugs, and more preferably foodstuffs.

More preferably, the emulsion compositions as emulsion foods are oil-in-water (O/W) emulsions, such as salad dressings, mayonnaises, coffee with milk, custards, and water-in-oil (W/O) emulsions, such as butter creams.

However, the present invention is not limited to these emulsion foods, and can be applied to various kinds of emulsion foods. For example, the following foods can be mentioned: frozen desserts, such as ice cream, ice milk, *lact ice;* beverages, such as milk, milk beverages; puddings, such as custard puddings, milk puddings; coated chocolates, such as colored sugar-coated chocolate candies; flavored chocolates, such as strawberry chocolates, blueberry chocolates, melon chocolates; confections, such as soft candies, caramels, biscuits, cookies; seasonings liquids, such as ketchups, basting, sauces; processed meat products, such as sausage, meat patties fried chicken; processed marine products, such as fish sausage; breads, such as sandwich breads, pastries, specialty or filled breads; cake pastries, such as doughnuts, pies; cream, such as coffee cream, fresh cream, ustards, whipped cream, fermented cream, sour cream; soups, such as potage soup, cream soup, stew, curry, gratin; various prepared foods and processed foods. In addition to the above-mentioned commodity goods, protein/phosphorus/potassium-controlled foods, salt-controlled foods, fat-and-oil-controlled foods, foods for regulating the functions of the intestines, calcium/iron/vitamin-enriched foods, low-allergy foods, concentrated liquid foods, mixer foods, minced foods, and like special foods and therapeutic diet foods can be mentioned.

The method of the present invention involves as a feature emulsifying using the above-mentioned modified pectin in a process of preparing the above-mentioned emulsion composition.

Specifically, the method of the present invention can also be carried out by (a) homogenizing the above-mentioned modified water dispersions of pectin in the presence of water, (b) mixing the obtained modified pectin-containing liquid with raw materials for the above-mentioned emulsion composition, and subsequently (c) emulsifying the mixture (Method 2).

Hereinafter, the preparation methods according to Methods 1 and 2 will be described.

### (2-1) Preparation Method of Emulsion Composition According to Method 1

In Method 1, the modified pectin to be mixed with raw materials for an emulsion composition may be in the powder form , or may be dissolved or swelled in a solvent. More specifically, in the case of Method 1, modified pectin in the powder form may be mixed with raw materials for an emulsion composition then emulsified or modified pectin may be dissolved, swelled, or dispersed in water and other solvents, mixed with raw materials for an emulsion composition then emulsified. In other words, in the case of Method 1, the modified pectin is subjected to emulsification (homogenization) in a state where other raw materials for an emulsion composition can co exist.

The modified pectin used in Method 1 is prepared by heating pectin to wet heat treatment at a temperature of 50 to 150°C at a relative humidity of 20 to 90% for 1 to 48 hours. A modified pectin obtained by subjecting pectin to wet heat treatment preferably at a temperature of 50 to 90°C at a relative humidity of 50 to 90%, and more preferably at a temperature of 60 to 80°C at a relative humidity of 60 to 80% for 1 to 24 hours, preferably 2 to 24 hours, and more preferably 3 to 24 hours.

The amount of the modified pectin added to an emulsion composition ranges, depending on the type of target emulsion composition and the emulsifying properties of the modified pectin, usually 0.01 to 10% by weight, and preferably from 0.05 to 5% by weight as the concentration of modified pectin in 100% by weight of the final emulsion composition.

The emulsification of the mixture obtained by mixing the raw materials for the emulsion composition with the modified pectin can be performed in accordance with a usual emulsification method. For example, the mixture can be emulsified using an emulsifier or emulsification mixer, such as a nanomizer, a homogenizer, a homomixer, a colloid mill, a jet mill, Manton Gaulin Homogenizer.

When mixed with other raw materials for emulsion compositions, the modified pectin can be used with or without other food ingredients in a range where the present invention is not adversely affected. When preparing emulsion foods, examples of food ingredients that can be used in combination with the modified pectin include amino acids or salts thereof, such as monosodium L-aspartate; nucleic acids or salts thereof, such as disodium 5'-inosinate; organic acids or salts thereof, such as potassium-citrate; seasonings typified by minerals, such as potassium chloride; shelf-life extending agents, such as mustard extract, Japanese horseradish extract, kojic acid; preservatives, such as milt protein extract, polylysine, sorbic acid; enzymes, such as alpha and beta amylases, alpha and beta glucosidases papain; pH adjusters, such as citric acid, fumaric acid, succinic acid; emulsifiers, such as sucrose fatty acid ester, glycerine fatty acid ester, organic acid monoglyceride, lecithin; flavors; colorants, such as β-carotene, annatto colorant; thickeners and gelling agents, such as guar gum, tara gum, locust bean gum, water-soluble soybean polysaccharides, tamarind seed gum, psyllium seed gum, konjac flour, konjac glucomannan, starch, chemically-modified and physically-modified starches, starch hydrolysate, gum arabic, tragacanth gum, karaya gum, ghatti gum, pectin, agar, carrageenan, alginic acid, alginate, xanthan gum, gellan gum, pullulan, curdlan, rhamsan gum, welan gum, microcrystalline cellulose, microfibrous cellulose, fermented cellulose, carboxymethylcellulose (CMC) salt, methylcellulose (MC), ethylmethylcellulose, hydroxypropylcellulose (HPC), hydroxy propylmethyl cellulose (HMPC), chitin, chitosan; gelling agents; leavenings; proteins, such as whey protein, soy protein; sugars, such as sucrose, fructose, leduced starch syrup, erythritol, xylitol; sweeteners, such as sucralose, thaumatin, acesulfame potassium, aspartame; vitamins, such as vitamin A, vitamin C, vitamin E, vitamin K; minerals, such as iron, calcium.

When modified pectin is used in combination with other food ingredients, it does not matter how to mix them to obtain required functionality. For example, pectin previously modified by the above-mentioned moist heat treatment may be mixed with other food ingredients, or a mixture obtained by mixing unmodified pectin (raw material pectin) with other food ingredients in powder form is subjected to the above-mentioned moist heat treatment as a mixture to modify pectin for use.

### (2-2) Preparation Method of Emulsion Composition According to Method 2

Method 2 has a feature of using the modified pectin homogenized in water systems prior to mixing with other raw materials for emulsion compositions. Here, the homogenization treatment refers to shear so that modified pectin is uniformly dispersed in water, and can be carried out using Blender, Mixer, Sonication, membrane, or emulsifiers or emulsification mixers, such as nanomizer, homogenizer, homomixer, colloid mill, jet mill, Manton Gaulin Homogenizer.

More specifically, according to Method 2, the modified pectin can be homogenized beforehand in water systems using the above-described machines, the obtained pectin is mixed with other raw materials for emulsion compositions, and subsequently the resultant is emulsified, thereby preparing emulsion compositions.

The modified pectin used in Method 2 is prepared through moist heat treatment at a temperature of 50 to 150°C at a relative humidity of 20 to 90% for 1 to 48 hours. Preferably used is modified pectin prepared through moist heat treatment at a temperature of 60 to 150°C at a relative humidity of 50 to 90% and more preferably at a temperature of 80 to 100°C at a relative humidity of 70 to 90% for 5 to 48 hours, preferably for 12 to 48 hours, and more preferably for 18 to 48 hours.

Similar to the Method 1, when mixing with other raw materials for emulsion compositions, the modified pectin alone can be used with or without other food ingredients in a range where the present invention is not adversely affected. Moreover, emulsion treatment after mixing with other raw materials can be carried out in the same manner as in the Method 1.

In the case of Method 2, the addition level of modified pectin depends on the type of emulsion compositions and emulsifying performance of modified pectin, but, for example, within the range of 0.01 to 10% by weight, and preferably 0. 05 to 5% by weight in the final emulsion compositions as 100% as similar to the Method 1.

By mixing the modified pectin-containing liquid, which was obtained by homogenizing the modified pectin in water systems prior to emulsification, with raw materials for emulsion compositions according to the Method 2, the emulsifying performance of the modified pectin can be demonstrated more effectively, and emulsion compositions with more excellent emulsifying activity and emulsion stability can be prepared in comparison with the Method 1. Moreover, according to the Method 2, higher heat resistance can be imparted to emulsion compositions rather than the case where the Method 1 is employed.

### II. Emulsion Compositions

The present invention provides emulsion compositions obtained using the above-described Method 2. Examples of the emulsion compositions include oil-in-water (O/W) emulsions, water-in-oil (W/O) emulsions, and multiple emulsions (O/W/O and W/O/W). Such emulsion compositions are for foodstuffs, cosmetics, pharmaceuticals, quasi-medical drugs, industrial goods, daily necessities, personal care goods, irrespective of the field or type, and preferably are foodstuffs, cosmetics, medicals, and quasi-medical drugs, and more preferably are foodstuffs.

Mentioned as emulsion foods are oil-in-water (O/W) emulsions, such as salad dressings, mayonnaises, coffee with milk, custards, and water-in-oil (W/O) emulsions, such as butter creams.

However, the present invention is not limited to these emulsion foods, and can be applied to various kinds of emulsion foods. For example, the following foods can be mentioned: frozen desserts, such as ice cream, ice milk, *lact ice;* beverages, such as milk, milk beverages; puddings, such as custard puddings, milk puddings; coated chocolates, such as colored sugar-coated chocolate candies; flavored chocolates, such as strawberry chocolates, blueberry chocolates, melon chocolates; confections, such as soft candies, caramels, biscuits, cookies; processed marine products, such as ketchups, basting sauces, and like seasoning liquids; fish sausage; breads, such as sandwich breads, pastries, specialty or filled breads; cake pastries, such as doughnuts, pies; cream, such as coffee cream, fresh cream, custards, whipped cream, fermented cream, sour cream; soups, such as potage soup, cream soup, stew, curry, gratin; various prepared foods and processed foods. In addition to the above-mentioned commodity goods, protein/phosphorus/potassium-controlled foods, salt-controlled foods, fat-and-oil-controlled foods, foods for regulating the functions of the intestines, calcium/iron/vitamin-enriched foods, low-allergy foods, concentrated liquid foods, mixer foods, minced foods, and like special foods and therapeutic diet foods can be mentioned.

The percentage of the modified pectin in emulsion compositions prepared by methods 1 and 2 is, depending on the type of emulsion compositions and the emulsifying performance of the modified pectin, usually 0.01 to 10% by weight, and preferably 0.05 to 5% by weight in the final emulsion compositions as 100%.

The emulsion compositions of the present invention shows better emulsifying activity, emulsion stability, heat resistance, and texture or mouthfeel in comparison emulsion compositions prepared using unmodified pectin (especially form sugar beet) in place of the modified pectin. Specifically, the emulsion compositions of the present invention has a feature of having emulsifying activity and emulsion stability equivalent to or higher than those of emulsion compositions prepared using animal ingredients, such as egg yolk; or using chemically synthesized emulsifiers, both of which have been conventionally used for the purpose of emulsification. The emulsion composition of the present invention has also a feature of having remarkably excellent heat resistance in comparison with emulsion compositions prepared using conventional emulsifiers, such as raw animal ingredients (e.g., egg yolk) or chemically synthesized emulsifiers.

### EXAMPLES

Hereinafter, the present invention will be specifically described according to Preparation Examples, Working Examples, wherein Examples 6 to 10 are Reference Examples. However, the present invention is not limited to the examples. In the formulation, unless otherwise specified, "part" means "part by weight" and "%" means "% by weight". In these examples, products marked with an asterisk (*) are products of San-Ei Gen F.F.I., and names marked with a double asterisk (**) are registered trademarks of San-Ei Gen F.F.I.

### Preparation Example 1: Preparation of Modified Pectin 1

The pectin used was "VIS TOP** D-2250"* (degree of esterification: ca. 55%, degree of acetylation: ca. 20%), which is a sugar beet pectin derived from sugar beet. The pectin was heated in an incubator (small environmental test device SM-641, a product of ESPEC Corp.) at a constant temperature of 80°C and a constant relative humidity of 80% for 24 hours to obtain modified pectin (hereinafter, referred to as "Modified Pectin 1").

The weight size average molecular weight *M*_{w} of sugar beet pectin before laser heat treatment (hereinafter referred to as "unmodified pectin") was estimated to be 484 kg/mol, while the *M*_{w} of modified pectin 1 after heat treatment was 552 kg/mol by size-exclusion-chromatography coupled with multi-angle laser light scattering(SEC-MASS).

### Preparation Example 2: Preparation of Modified Pectin 2

The pectin used was "VIS TOP** D-2250"* (degree of esterification: ca. 55%, degree of acetylation: ca. 20%), which is a sugar beet pectin derived from sugar beet similar to the Preparation Example 1. The pectin was heated in an incubator (small environmental test device SM-641, a product of ESPEC Corp.) at a constant temperature of 80°C and a constant relative humidity of 70% for 24 hours to obtain modified pectin (hereinafter, referred to as "Modified Pectin 2").

The *M*_{w} of sugar beet pectin before heat treatment (Unmodified Pectin) was 484 kg/mol, while the M_{w} of Modified Pectin 2 after heat treatment was 652 kg/mol.

### Preparation Example 3: Preparation of Modified Pectin 3

The pectin used was "VIS TOP** D-2250"* (degree of esterification: ca. 55%, degree of acetylation: ca. 20%), which is a sugar beet pectin derived from sugar beet. The pectin was heated in an incubator (small environmental test device SM-641, a product of ESPEC Corp.) at a constant temperature of 80°C and a constant relative humidity of 80% for 5 hours to obtain modified pectin (hereinafter, referred to as "Modified Pectin 3").

The M_{w} of sugar beet pectin before heat treatment (unmodified pectin) was 484 kg/mol, while the M_{w} of Modified Pectin 3 after heat treatment was 501 kg/mol by SEC-MALS.

### Example 1: Salad Dressings

### (1) Preparation of salad dressings

Salad dressings (Working Example 1) were prepared according to the formulation shown in table 1 using the Modified Pectin 1 prepared in Preparation Example 1. For comparison, dressings were prepared using egg yolk and xanthan gum (Comparative Example 1), or unmodified pectin (Comparative Example 2) in place of the Modified Pectin 1.

**Table 1**

| | Example 1 | Com. Ex. 1 | Com. Ex. 2 |
|---|---|---|---|
| Corn salad oil | 50.0 | 50.0 | 50.0 |
| Vinegar (Acidity: 10%) | 18.0 | 18.0 | 18.0 |
| Granulated sugar | 5.0 | 5.0 | 5.0 |
| Salt | 3.0 | 3.0 | 3.0 |
| L-sodium glutaminate | 0.4 | 0.4 | 0.4 |
| Egg yolk (60 M filtration) | - | 3.0 | - |
| Xanthan gum | - | 0.05 | - |
| Modified pectin 1 | 0.5 | - | - |
| Unmodified pectin | - | - | 0.5 |
| Deionized water | 23.1 | 20.55 | 23.1 |
| Total | 100.0 | 100.0 | 100.0 |

### (1-1) Preparation of salad dressings (Comparative Example 1)

Xanthan gum and granulated sugar were mixed in powder forms, and the resultant was added to deionized water, followed by stirring at 2000 rpm for 10 minutes at room temperature. To the resultant, vinegar, salt, and L-sodium glutaminate were added, and stirred at 1000 cpm for 5 minutes. Egg yolk was then added to the resultant, and stirred at 1000 cpm for further one minute. Corn salad oil was gradually added to the resultant, and mixed for 10 minutes using a homomixer at 10000 rpm, to prepare the dressings. The egg yolk used was filtered prior to use through a 60 mesh filter.

### (1-2) Preparation of salad dressings (Example 1, and Comparative Example 2)

Modified pectin 1 or unmodified pectin and granulated sugar were mixed in powder forms, and the resultant was added to deionized water, followed by stirring at 2000 rpm for 10 minutes at room temperature. The resultant was filtered through a 100 mesh filter, and homogenized twice at 50 MPa using a nanomizer (manufactured by YOSHIDA KIKAI KOGYO Co., Ltd.). To the aqueous pectin (containing a part of sugar) dispersion thus prepared, vinegar, salt, and sodium L-glutaminate were added, and the mixture was stirred for 5 minutes at1000 rpm. Corn salad oil was gradually added to the resultant, and mixed for further 10 minutes using a homomixer at 10000 rpm, to prepare the dressings.

### (2) Evaluation of Viscosity and Storage Stability (Emulsion Stability)

Each dressing prepared (Example 1 and Comparative Examples 1 and 2) was evaluated for the viscosity and the storage stability (emulsion stability) according to the following method.

### (2-1) Viscosity

Each dressing was stored at room temperature for 1 day, and the viscosity was determined at 20°C using a B-type rotational viscometer at a rotation speed of 60 rpm. The results are shown in Table 2.

**Table 2**

| | Viscosity (mPa·s) |
|---|---|
| Example 1 | 356 |
| Comparative Example 1 | 400 |
| Comparative Example 2 | 360 |

As shown in Table 2, the dressing (Example 1) prepared using Modified Pectin 1 had slightly lower viscosity compared with the dressing (Comparative Example 1) prepared using egg yolk and xanthan gum or unmodified pectin (comparative Example 2). However, textural attributes, such as smoothness and richness, were not markedly different between the treatments.

### (2-2) Storage Stability (Emulsion Stability)

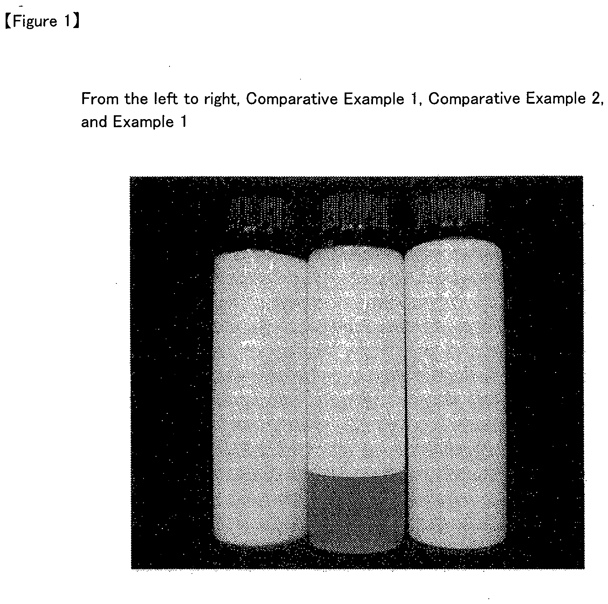

Upon storage at 60°C for 1 day, storage stability was The appearance of each dressing after upon storage at 60°C for 1 day is shown in Fig. 1 (Comparative Example 1, Comparative Example 2, and Example 1 from the left) . As shown in Fig. 1, the dressing prepared using unmodified pectin (Comparative Example 2) (Fig. 1, middle) had poor emulsion stability with apparent phase separation, while the dressing prepared using Modified Pectin 1 (Example 1) (Fig. 1, right end) was excellent in storage stability to a similar degree of the dressing prepared using egg yolk and xanthan gum in place of pectin (Comparative-Example 1) (Fig. 1, left end).

The results show that Modified Pectin 1 is excellent in emulsion stability compared with unmodified pectin, and the modified pectin can substitute egg yolk and xanthan gum. That is, the modified pectin has both emulsifying performance that egg yolk has, and the thickening effect and emulsion stability that xanthan gum has, and thus the modified pectin alone can satisfy all the functions required for a dressing (emulsion compositions). Therefore, the use of the modified pectin allows the preparation of high quality dressings excellent in emulsion stability (storage stability) and texture using raw botanical ingredients alone without using raw animal ingredients, such as egg yolk.

### Example 2: Mayonnaises

### (1) Preparation of mayonnaises

Mayonnaise (Example 2) was prepared according to the formulation shown in Table 3 using Modified Pectin 1 prepared in the Preparation Example 1. For comparison, mayonnaises were prepared using egg yolk (Comparative Example 3), or unmodified pectin (Comparative Example 4) in place of Modified Pectin 1.

**Table 3**

| | Example 2 | Com. Ex. 3 | Com. Ex. 4 |
|---|---|---|---|
| Corn salad oil | 75.0 | 75.0 | 75.0 |
| Vinegar (Acidity: 10%) | 4.8 | 4.8 | 4.8 |
| Granulated sugar | 2.5 | 2.5 | 2.5 |
| Salt | 1.5 | 1.5 | 1.5 |
| L-sodium glutaminate | 0.05 | 0.05 | 0.05 |
| Egg yolk | - | 9.0 | - |
| Modified pectin 1 | 0.4 | - | - |
| Unmodified pectin | - | - | 0.4 |
| Deionized water | 15.75 | 7.15 | 15.75 |
| Total | 100.0 | 100.0 | 100.0 |

### (1-1) Preparation of mayonnaises (Comparative Example 3)

Granulated sugar, salt, and sodium L-glutaminate were added to deionized water, and stirred at room temperature for 5 minutes for dissolution. After egg yolk and vinegar were added, corn salad oil was added to the solution obtained gradually, and then stirred for 20 minutes. Subsequently, emulsification was carried out through a colloid mill (manufactured by Tokushu Kika Kogyo Co., Ltd.) (slit width of 400 to 500 micrometers, digital 4), to prepare mayonnaises.

### (1-2) Preparation of mayonnaises (Example 2, and Comparative Example 4)

Modified pectin 1 or unmodified pectin was added to deionized water, followed by stirring at 2000 rpm for 10 minutes at room temperature. The resultant was filtered through a 100 mesh filter, and homogenized twice at 50 MPa using a nanomizer (manufactured by YOSHIDA KIKAI KOGYO Co., Ltd.). To 50% aqueous pectin dispersion thus prepared, Granulated sugar, salt, and sodium L-glutaminate were added, and the mixture was stirred for 5 minutes at room temperature. After vinegar was added, corn salad oil was gradually added to the resultant, and mixed for further 10 minutes. Subsequently, emulsification was carried out through a colloid mill (manufactured by Tokushu Kika Kogyo Co., Ltd.) (slit width of 400 to 500 micrometers, digital 4), to prepare mayonnaises.

### (2) Evaluation of Viscosity, Emulsion Stability, and Heat Resistance

Each mayonnaise prepared (Example 2, Comparative Examples 3 and 4) was determined for the viscosity, emulsion stability, and heat resistance according to the following method.

### (2-1) Viscosity

The viscosity was determined at 20°C for each mayonnaise immediately after preparation using a B-type rotational viscometer at a rotation speed of 5 rpm. The results are shown in Table 4.

**Table 4**

| | Viscosity (mPa·s) |
|---|---|
| Example 2 | 86, 981 |
| Comparative Example 3 | 96, 354 |
| Comparative Example 4 | 40, 886 |

As shown in Table 4, the viscosity of the mayonnaise prepared using unmodified pectin (Comparative Example 4) was markedly lower than that as compared with the mayonnaise prepared using egg yolk (Comparative Example 3) . The viscosity of the mayonnaise prepared using Modified Pectin 1 (Example 2) was, on the contrary, slightly lower than the mayonnaise prepared using egg yolk (Comparative Example 3), showing similar viscosity profile. With respect to textural attributes, such as smoothness, richness, the mayonnaise prepared using unmodified pectin (Comparative Example 4) was apparently inferior in smoothness, while the mayonnaise prepared using Modified Pectin 1(Example 2) was hardly different from the mayonnaise prepared using egg yolk (Comparative Example 3).

### (2-2) Emulsion Stability

The emulsion stability was evaluated by observing emulsion particles of each mayonnaise by a microscopical technique upon storage for one week at 20°C. The emulsion particles of each mayonnaise were visualized using a confocal laser scanning microscope (CLSM) after treatment with fluorescent dyes (FITC, Nile Red). Thus, the protein fraction was labeled with fluorescent dyes FITC imaged in green, and oil droplet was labeled with a fluorescent dyes Nile Red imaged in red.

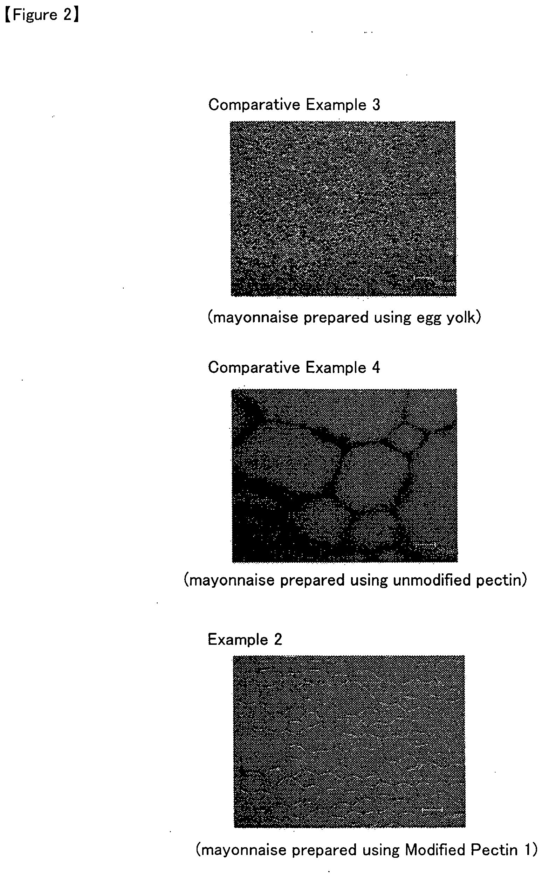

The results are shown in Fig. 2. As shown in Fig. 2, the diameter of the emulsion particles of the mayonnaise prepared using Modified Pectin 1 (Example 2) (Fig. 2, bottom view) was larger than that of the mayonnaise prepared using egg yolk (Comparative Example 3) (Fig. 2, top view), but was apparently smaller than that of the mayonnaise prepared using unmodified pectin (Comparative Example 4) (Fig. 2, middle view) . Moreover, it was confirmed in the mayonnaise prepared using Modified Pectin 1(Example 2) and the mayonnaise prepared using egg yolk(Comparative Example 3) that the protein fractions (green regions labeled with FITC) were adsorbed around the oil droplets (red regions). These results suggested that proteins were adsorbed onto an O/W interface, reducing the surface tension and that emulsion particles are stably maintained due to a protein film formed at the interface .

### (2-3) Heat Resistance

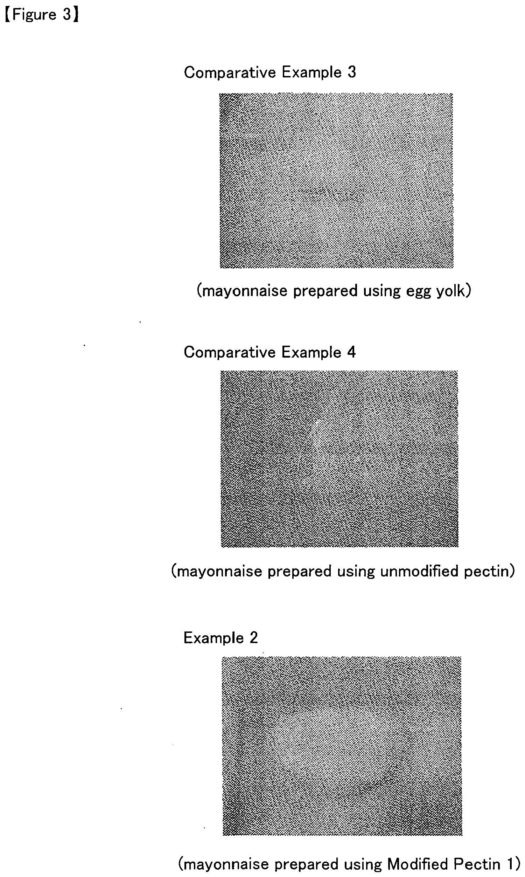

Upon storage at 20°C for one week, each mayonnaise was heated at 180°C for 3 minutes in an oven, and then the appearance was inspected visually to evaluate heat resistance. The results are shown in Fig. 3. As shown in Fig. 3, the mayonnaise prepared using Modified Pectin 1(Example 2) (Fig. 3, bottom) showed excellent heat resistance and free from melting or separation of fats and oils that was apparent in the mayonnaise prepared using egg yolk (Comparative Example 3) (Fig. 3, top view) or the mayonnaise prepared using unmodified pectin(Comparative Example 4) (Fig. 3, middle view).

These results indicate that the modified pectin is excellent particularly in the emulsion stability in comparison with unmodified pectin, and can substitute egg yolk. That is, it is found that the modified pectin has both emulsifying activity and emulsion stability that egg yolk has, and the functions required for mayonnaise (emulsion compositions) can be satisfied through the use of the modified pectin alone. Therefore, the use of the modified pectin allows the preparation of high quality mayonnaises with excellent storage stability (emulsion stability) and desired textural attributes using raw botanical ingredients alone without using raw animal ingredients, such as egg yolk. Furthermore, the use of modified pectin gives mayonnaise a heat resistance that cannot be obtained from egg yolk or unmodified pectin.

### Example 3: Coffee with Milk

### (1) Preparation of Coffee with Milk

Coffee with Milk (Example 3) was prepared according to the formulation shown in Table 5 using Modified Pectin 1 prepared in Preparation Example 1. For comparison, samples of coffee with milk were prepared using a mixture of chemically synthesized emulsifier (Comparative Example 5) containing sucrose fatty acid ester and glycerine fatty acid ester or unmodified pectin (Comparative Example 6) in place of Modified Pectin 1.

**Table 5**

| | Example 3 | Com. Ex. 5 | Com. Ex. 6 |
|---|---|---|---|
| Coffee extract | 30.5 | 30.5 | 30.5 |
| Milk | 15.0 | 15.0 | 15.0 |
| Granulated sugar | 6.0 | 6.0 | 6.0 |
| Emulsifier (a mixture of sucrose fatty acid ester and glycerine fatty acid ester) | - | 0.15 | - |
| Modified pectin 1 | 0.15 | - | - |
| Unmodified pectin | - | - | 0.15 |
| Deionized water | 48.35 | 48.35 | 48.35 |
| Total | 100.0 | 100.0 | 100.0 |

### (1-1) Preparation of Coffee with Milk (Comparative Example 5)

To roughly-ground coffee beans (L value 21), 6 fold volume of boiling water was added, and filtered for extraction. The extract was added to the roughly ground coffee beans and filtered for further extraction. The resultant was cooled to 20°C, preparing a coffee extract (Brix 4.1, pH 5.3). The proportion of coffee extract was determined so that the amount of coffee solids contained in the final product was 1.25% (30.5 parts).

Granulated sugar was added to deionized water (6 parts), heated to 50°C, and then stirred for 10 minutes at the same temperature. The resultant was cooled to 20°C, to prepare 50% sugar solutions. An emulsifier (a mixture of sucrose fatty acid ester and glycerine fatty acid ester) was added to deionized water (30 parts), heated to 75°C, and then stirred for 10 minutes at the same temperature. The resultant was cooled to 20°C, to prepare emulsifier solutions.

The thus-prepared coffee extract, 50% sugar solutions, and emulsifier solutions were mixed under stirring with milk, the mixture was heated to 75°C. After adjustment of the weight with deionized water, the mixture was homogenization at 20 MPa. After homogenization, the resultant was poured into cans (ca. 100 mL/can), the obtained cans were heated at 123°C for 20 minutes using a retort sterilizer to prepare canned coffee with milk (Comparative Example 5).

### (1-2) Preparation of Coffee with Milk (Example 3, Comparative Example 6)

Modified Pectin 1 or unmodified pectin was added to deionized water, and then stirred at 2000 rpm for 10 minutes at room temperature. The resultant was filtered through a 100 mesh filter, and homogenized twice at 50MPa using a nanomizer (manufactured by YOSHIDA KIKAI KOGYO Co., Ltd.). To the thus-prepared 2% pectin solutions, the coffee extract and 50% sugar solutions and the deionized water that were prepared in the same manner as in (1-1), and milk were mixed with stirring . After heated to 75°C, the weight was adjusted by deionized water, and the resultant was homogenized at 20 MPa. After homogenization, the resultant was poured into cans (ca. 100 mL/can), which were heated at 123°C for 20 minutes using a retort sterilizer to prepare canned coffee with milk (Example 3, Comparative Example 6).

### (2) Evaluation of Storage Stability

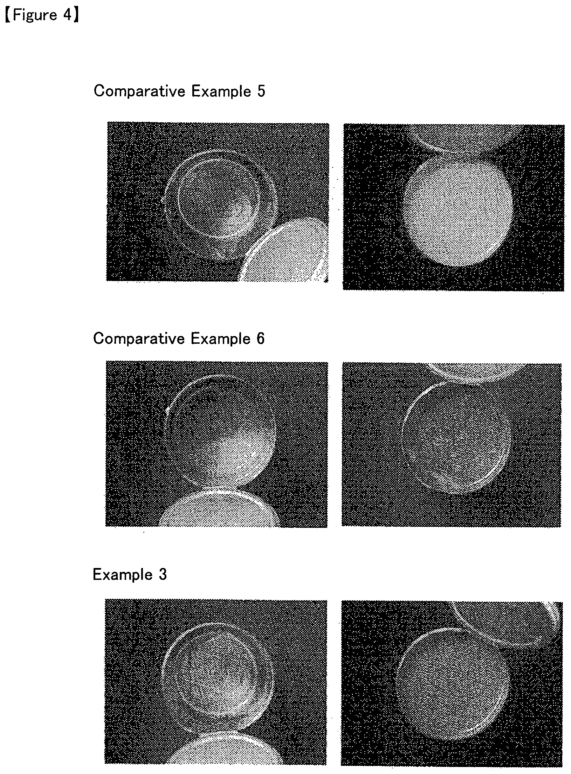

Upon storage at 60°C for 2 weeks of the prepared canned coffee with milk (Example 3, Comparative Examples 5 and 6), the cans were opened, to evaluate the storage stability by inspecting visually whether precipitate and white suspended matter occurred. The results are shown in Fig. 4. The right column shows the top-view pictures of the beverages, and the left column shows also top-view pictures of the precipitates at the bottom after removing the beverages (Comparative Examples 5 and 6, and Example 3 from the upper to lower in each colum).

As shown in Fig. 4, the amount of precipitates becomes lager in the order; Example 3 < Comparative Example 5 < Comparative Example 6. Also, the amount of white suspended matter becomes larger in the order; Example 3 < Comparative Example 6 < Comparative Example 5. This shows that the amounts of precipitate and the white suspended matter in the coffee with milk prepared using the modified pectin (Example 3) are apparently smaller in comparison with the coffee with milk samples prepared using a chemically synthesized emulsifier or unmodified pectin (Comparative Examples 5 and 6), showing excellent storage stability of modified pectin. The above results show that the modified pectin is more excellent in emulsion stability than not only unmodified pectin but also a chemically synthesized emulsifier (a mixture of sucrose fatty acid ester and glycerine fatty acid ester).

### Example 4: Custard creams

### (1)Preparation of Custard creams

Custard creams (Example 4) were prepared according to the formulation shown in Table 6 using Modified Pectin 1 prepared in Preparation Example 1. For comparison, using whey protein isolate (Comparative Example 7) or unmodified pectin (Comparative Example 8) in place of Modified Pectin 1, custards were prepared.

**[Table 6]**

| | Example 4 | Com. Ex. 7 | Com. Ex. 8 |
|---|---|---|---|
| Granulated sugar | 30.0 | 30.0 | 30.0 |
| Unsalted butter | 10.0 | 10.0 | 10.0 |
| 20% sugar added egg yolk | 6.25 | 6.25 | 6.25 |
| Modified starch (Stabilized and crosslinked starch derived from corn) | 3.0 | 3.0 | 3.0 |
| Weak flour | 2.0 | 2.0 | 2.0 |
| Skim milk powder | 2.0 | 2.0 | 2.0 |
| Glycine | 2.0 | 2.0 | 2.0 |
| Gellan gum | 0.1 | 0.1 | 0.1 |
| Custard oil | 0.1 | 0.1 | 0.1 |
| Whey protein isolate | - | 1.0 | - |
| Modified pectin 1 | 0.5 | - | - |
| Unmodified pectin | - | - | 0.5 |
| Deionized water | 44.05 | 43.55 | 44.05 |
| Total | 100.0 | 100.0 | 100.0 |

### (1-1) Preparation of Custard creams (Comparative Example 7)

Granulated sugar, modified starch, weak flour, skim milk powder, gellan gum, whey protein isolate, and glycine were mixed in powder forms. This powder mixture was mixed with deionized water, unsalted butter, and 20% sugar-added egg yolk and was homogenized at 8000cpm for 10 minutes using T. K. robomix (manufactured by Tokusyu Kika Kogyo Co., Ltd.). The resultant was stirred at 90°C for 10 minutes, to which custard oil was added. Then finaly, the weight was corrected using to 100% weight with deionized water to prepare custard creams (Comparative Example 7).

### (1-2) Preparation of custard creams (Example 4, Comparative Example 8)

Modified Pectin 1 or unmodified pectin was added to deionized water and was stirred at 2000 rpm for 10 minutes at room temperature. The resultant was filtered through a 100-mesh filter, followed by homogenization twice at 50 MPa through a nanomizer (manufactured by yoshida kikai co., ltd.) . The 2% pectin solutions thus prepared were mixed with a powder-mixture of granulated sugar, modified starch, weak flour, skim milk powder, gellan gum, and glycine, deionized water, unsalted butter, and 20%-sugar-added egg yolk, which was homogenized at 8000 rpm for 10 minutes using a T.K. robomix (manufactured by Tokusyu Kika Kogyo Co., Ltd.). The resultant was stirred at 90°C for 10 minutes, to which custard oil was added. Finally, the weight was corrected using to 100% weight deionized water, to prepare custard creams (Example 4, Comparative Example 8).

### (2) Evaluation of Emulsifying activity and Heat-resistance

Each of the prepared custard creams (Example 4, Comparative Examples 7 to 8) was evaluated for emulsifying activity and heat resistance according to the following methods.

### (2-1) Emulsifying activity

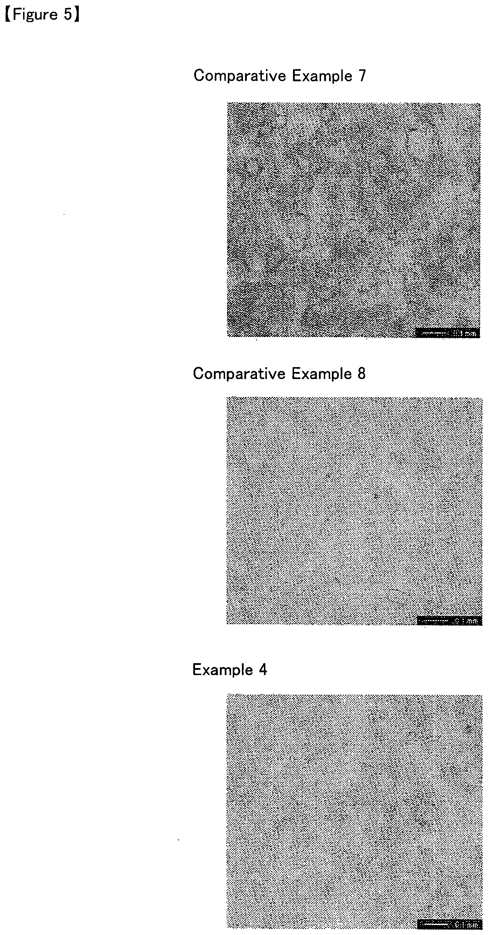

The emulsifying activity was evaluated by observing oil droplets particles of each custard cream, using an optical microscope (x 150) upon storage at 20°C for 1 day. The results are shown in Fig. 5. As shown in Fig. 5, the oil droplets become larger in size in the order; Example 4 (Fig. 5, lower) < Comparative Example 8 (Fig. 5, Middle) < Comparative Example 7 (Fig. 5, upper), and the oil droplets of the custard creams of Example 4 were the smallest and most homogeneous. This shows that the custard prepared using Modified Pectin 1 (Example 4) has excellent emulsifying activity in comparison with the custard creams prepared using milk serum separation protein and unmodified pectin (Comparative Examples 7 and 8).

### (2-2) Heat resistance

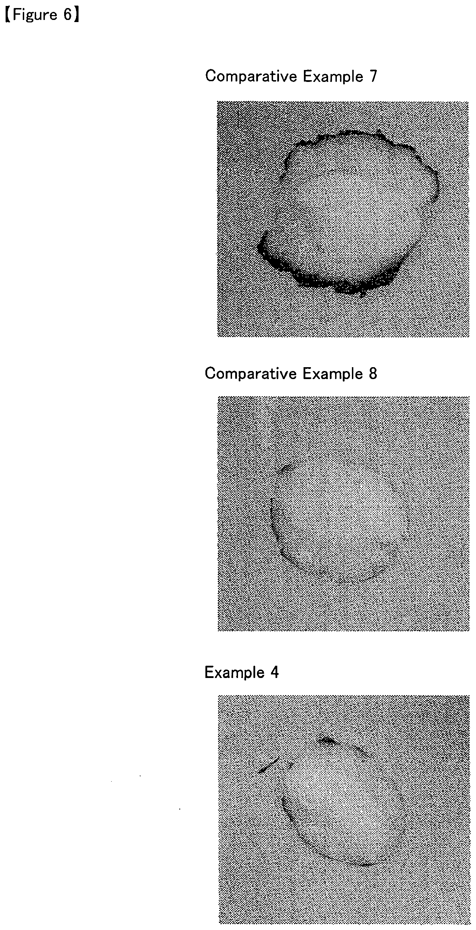

Upon storage at 20°C for 1 day, each custard cream was heated at 200°C for 10 minutes, and then the appearance was inspected visually to evaluate heat resistance. The results are shown in Fig. 6 (Comparative Example 7, Comparative Example 8, and Example 4 from the upper to lower). As shown in Fig. 6, in the custards prepared using Modified Pectin 1 (Example 4: Fig. 6, lower view), melting, which was observed in the custard creams using whey protein isolate or unmodified pectin (Comparative Examples 7 and 8) (Fig. 6, upper and middle, respectively), occurred less frequently, showing excellent shape retention (Heat resistance) against heat. The shape retention (heat resistance) becomes higher in the order; Example 4 (Fig. 6, lower) > Comparative Example 8 (Fig. 6, middle) > Comparative Example 7 (Fig. 6, upper), which is substantially in agreement with the results from the emulsifying activity.

Based on the above results, the modified pectin exhibited excellent emulsifying activity and a high heat-resistance in comparison with the unmodified pectin. Moreover, it was shown that the modified pectin can replace animal protein materials, such as whey protein isolate, which are used in the preparation of custard creams.

### Example 5: Butter creams

### (1) Preparation of butter creams

A butter cream (Example 5) was prepared according to the formulation shown in Table 7 using Modified Pectin 1 prepared in Preparation Example 1. Separately, for comparison, butter creams were prepared using no pectin materials (Comparative Example 9) or using unmodified pectin in place of Modified Pectin 1 (Comparative Example 10).

**[Table 7]**

| | Example 5 | Example 9 | Example 10 |
|---|---|---|---|
| Shortening | 55.0 | 55.0 | 55.0 |
| Granulated sugar | 30.0 | 30.0 | 30.0 |
| Flavor | 0.2 | 0.2 | 0.2 |
| Modified pectin 1 | 0.1 | - | - |
| Unmodified pectin | - | - | 0.1 |
| Deionized water | 14.7 | 14.8 | 14.7 |
| Total | 100.0 | 100.0 | 100.0 |

### (1-1) Preparation of Butter Cream (Comparative Example 9)

Granulated sugar was added to deionized water and heated to 80°C, followed by stirring at 1000rpm at 80°C for 5 minutes. The resultant was cooled to 20°C, thereby preparing sugar solutions. Shortening (containing some emulsifiers) was weighed and placed in a ball, to which the sugar solutions prepared above were gradually added under stirring with a mixer (digital 1). A flavor was added to the mixture, and stirred further for 5 minutes (digital 2), thereby preparing butter creams (Comparative Example 9).

### (1-2) Preparation of Butter Creams (Example 5, Comparative Example 10)

Modified pectin 1 or unmodified pectin was added to deionized water and was stirred at 2000rpm at room temperature for 10 minutes. The resultant was filtered through a 100 mesh filter, and then homogenized twice at 50MPa using a nanomizer (manufactured by YOSHIDA KIKAI KOGYO Co., Ltd.), thereby preparing 2% pectin solutions. Shortening (containing some emulsifiers) was weighed and placed in a ball, to which a mixture of the 2% pectin solutions prepared above and the sugar solutions prepared according to the method described in (1-1) was gradually added with stirring using a mixer (digital 1). A flavor was added to the mixture, and further stirred for 5 minutes (digital 2), thereby preparing butter creams (Example 5 and Comparative Example 10).

### (2) Evaluation of Shape Retention

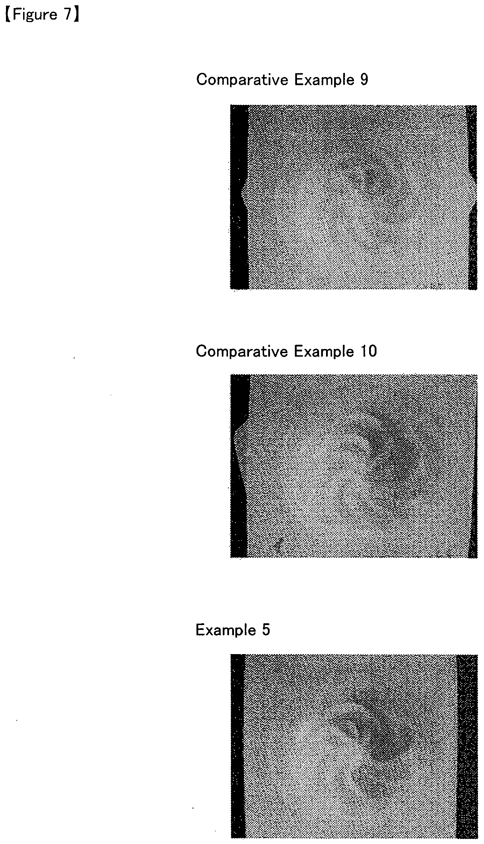

Each of the butter creams (Example 5, Comparative Examples 9 to 10) prepared above was placed in a pastic bag with an octagonal metal tip, and was squeezed onto a filter paper. The squeezed cream was covered with a cup to avoid exceeds moisture evaporation and allowed to stand at room temperature for 3 hours. Then, the appearance was inspected visually observed to evaluate its shape retention. The results are shown in Fig. 7 (from the upper to lower, Comparative Example 9, Comparative Example 10, Example 5). As shown in Fig. 7, the edges become sharper in the order; Example 5 (sharpest) > Comparative Example 10 > Comparative Example 9 ((least sharp), showing high shape retention (decorative cream flower production abilities). Moreover, the textural attributes, such as smoothness, and the flavor retention abilities were also excellent in this order.

### Examples 6 to 8: Salad dressings

### (1) Preparation of Salad dressings

Salad dressings (Examples 6 to 8) were prepared according to the formulation shown in Table 8 using Modified Pectin 2 prepared in Preparation Example 2. Separately, for comparison, dressings were prepared using egg yolk and xanthan gum (Comparative Example 11) or unmodified pectin (Comparative Example 12), in place of the Modified Pectin 2.

**[Table 8]**

| | Example 6 | Example 7 | Example 8 | Com. Ex. 3 | Com. Ex. 4 |
|---|---|---|---|---|---|
| Corn salad oil | 50.0 | 50.0 | 50.0 | 50.0 | 50.0 |
| Vinegar (Acid degree: 10%) | 18.0 | 18.0 | 18.0 | 18.0 | 18.0 |
| Granulated sugar | 5.0 | 5.0 | 5.0 | 5.0 | 5.0 |
| Salt | 3.0 | 3.0 | 3.0 | 3.0 | 3.0 |
| L-sodium glutaminate | 0.4 | 0.4 | 0.4 | 0.4 | 0.4 |
| Egg yolk (60 M filtration) | - | - | - | 3.0 | - |
| Xanthan gum | | | | 0.05 | - |
| Modified pectin 2 | 0.3 | 0.4 | 0.5 | - | - |
| Unmodified pectin | - | - | - | - | 0.5 |
| Deionized water | 23.3 | 23.2 | 23.1 | 20.55 | 23.1 |
| Total | 100.0 | 100.0 | 100.0 | 100.0 | 100.0 |

### (1-1) Preparation of Dressing (Comparative Example 11)

Xanthan gum and granulated sugar were mixed in powder form. The mixture was added to deionized water, and then stirred at 2000rpm at room temperature for 10 minutes . Vinegar, salt, and L-sodium glutaminate were added to the resultant and was stirred at 1000 rpm for 5 minutes. Subsequently, egg yolk was added, and then the mixture was stirred at 1000 rpm further for 1 minute. Corn salad oil was gradually added to the resultant, and homogenized at 1000rpm for 10 minutes using a homomixer, thereby preparing dressings (Comparative Example 11). It should be noted that the egg yolk was filtered with a 60 mesh filter prior to use.

### (1-2) Preparation of Dressings (Examples 6 to 8 and Comparative Example 12)

Modified Pectin 2 or unmodified pectin and granulated sugar were mixed in powder form. The mixture was added to deionized water, and then stirred at 2000 rpm at room temperature for 10 minutes. Vinegar, salt, and L-sodium glutaminate were added to the resultant, and the mixture was stirred at 1000 rpm for 5 minutes. Subsequently, corn salad oil was gradually added to the resultant, and homogenized at 1000 rpm for further 10 minutes using a homomixer, thereby preparing dressings (Examples 6 to 8 and Comparative Example 12) .

### (2) Evaluation of viscosity, Emulsifying activity, and Emulsion Stability

Each dressing prepared (Examples 6 to 8, Comparative Examples 11 and 12) was evaluated for viscosity, emulsifying activity, and emulsion stability according to the following method.

### (2-1) Viscosity

Upon storage at room temperature for 1 day, the viscosity of each dressing was determined at 20°C using a B-type rotational viscometer at a rotation speed of 60 rpm. The results are shown in Table 9.

**[Table 9]**

| | Viscosity (mPa·s) |
|---|---|
| Example 6 | 754 |
| Example 7 | 1140 |
| Example 8 | 1554 |
| Comparative Example 11 | 756 |
| Comparative Example 12 | 640 |

As shown in Table 9, with respect to the dressings prepared using Modified Pectin 2(Examples 6 to 8), the viscosity increased with increasing the addition level of modified pectin. The use of a 0.3% Modified Pectin 2 (Example 6) showed equivalent viscosity to the dressing prepared by using 3% egg yolk and 0.05% xanthan gum(Comparative Example 11). A dressing prepared using unmodified pectin (at 0.5%) (Comparative Example 12) showed had extremely low viscosity in comparison with the dressing prepared using a modified pectin at the same addition level (Example 8).

### (2-2) Emulsifying activity and Emulsion stability

Emulsifying properties of each dressing (Examples 6 to 8 and Comparative Examples 11 and 12) upon storage at room temperature for 1 day or at 40 °C for one week was evaluated by observing particle size of oil droplets and its uniformity using an optical microscope (x 150). Simultaneously, the average particle diameter (50% volume mean diameter) of the oil droplets was measured using a laser diffraction particle-size-distribution analyzer (manufactured by Shimazu SALD-2100) .

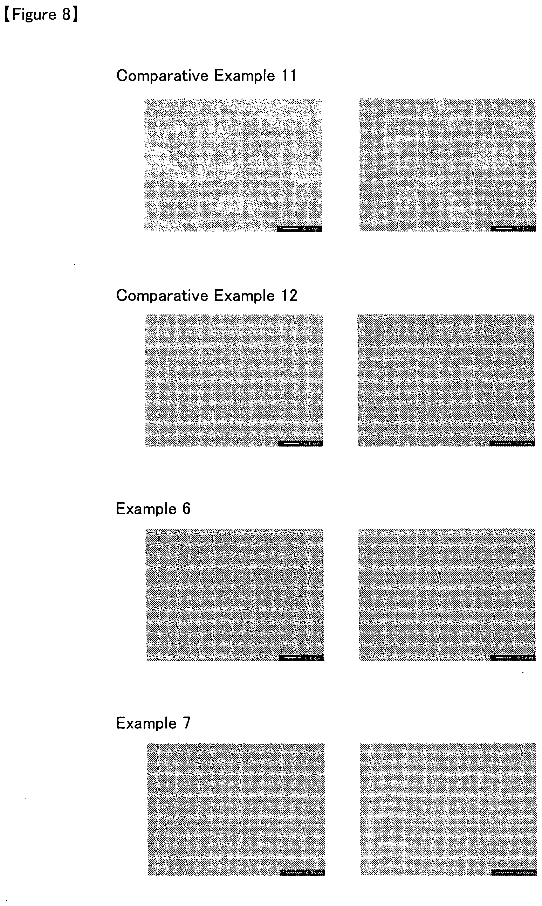

The results are shown in Fig. 8. The left column shows the results upon storage at room temperature for 1 day, and the right column represents the results upon storage at 40°C for one week (from the upper to lower, Comparative Examples 11 and 12 and Examples 6 and 7). As shown in Fig. 8, for the dressing (Comparative Example 11) prepared using egg yolk and xanthan gum, particle size of oil droplets was not uniform and the oil droplets larger in size than 50 micrometers were found , in contrast, for the dressing prepared using modified pectin(Examples 6 and 7), particle sizes of the oil droplets was fine and homogeneous, and there was little change in size upon storage. For the dressing prepared using unmodified pectin (Comparative Example 12), the particle sizes of oil droplets were larger with more apparent change in size upon storage, in comparison with the dressings prepared using Modified Pectin 2 (Examples 6 and 7).

The average particle diameter (50% volume mean diameter) of oil droplets of each dressing (upon storage at room temperature for 1 day, or at 40°C for one week) are shown in Table 10. In order to measure the degree of change upon storage, a percentage of increase (%) in the average particle diameter upon storage at 40°C for one week relative to that upon storage at room temperature for 1 day was calculated (thus average particle diameter upon storage at room temperature for 1 day was defined as 100%) . The results are also shown in Table 10.

**[Table 10]**

| | Average particle diameter (µm) | | Percentage of increase in average particle diameter upon storage |
|---|---|---|---|
| | Upon storage at room temperature for 1 day | Upon storage at 40°C for one week | |
| Example 6 | 19.6 | 29.9 | 152% |
| Example 7 | 16.5 | 18.0 | 109% |
| Example 8 | 12.5 | 12.3 | 98% |
| Comparative Example 11 | 35.4 | 44.7 | 126% |
| Comparative Example 12 | 9.9 | 26.0 | 263% |

As is clear from Table 10, the average particle diameter of the oil droplets for the dressings prepared using Modified Pectin 2 (Examples 6 to 8) were much smaller than that of the dressing prepared using egg yolk and xanthan gum (Comparative Example 11), upon storage at room temperature for 1 day or at 40°C for one week (For example, upon storage at room temperature for 1 day, the average particle diameter of the oil droplets for the dressings of Examples 6, 7, and 8 corresponded to about 55%, 47%, and 35% of that for the dressing of Comparative Example 11).

The average particle diameter of the oil droplets for the dressing prepared using unmodified pectin (Comparative Example 12) was smaller than those for the dressings prepared using Modified Pectin 2 (Examples 6 to 8) upon storage at room temperature for 1 day. However, the average particle diameter of the oil droplets for the dressing of Comparative Example 12 increased notable upon storage, showing poor emulsion stability. The dressings prepared using Modified Pectin 2 (Examples 6 to 8), the percentage of increase in the particle diameter upon storage was lower in comparison with the dressing prepared using unmodified pectin (Comparative Example 12) ,confirming that the change over time was significantly suppressed. It should be noted that although the change over time for the dressing of Comparative Example 11 was relatively small, it did not make sense because the average particle diameter was much larger than any other treatment at the beginning (i.e, upon storage at room temperature for 1 day).

### Examples 9 and 10: Dressings

### (1) Preparation of Dressing

Dressings (Examples 9 and 10: Example 9 using a modified pectin alone; Example 10 using modified pectin and xanthan gum) were prepared according to the formulation shown in Table 11 using Modified Pectin 3 prepared in Preparation Example 3 and xanthan gum. For comparison, dressings (Comparative Examples 14 and 15: Comparative Example 14 used unmodified pectin alone; Comparative Example 15 used unmodified pectin and xanthan gum) were prepared using unmodified pectin in place of Modified Pectin 3. Separately, a dressing (Comparative Example 13) was prepared using egg yolk and xanthan gum without using pectin (modified or unmodified).

**[Table 11]**

| | Example 9 | Example 10 | Com. Ex. 13 | Com. Ex. 14 | Com. Ex. 15 |
|---|---|---|---|---|---|
| Corn salad oil | 50.0 | 50.0 | 50.0 | 50.0 | 50.0 |
| Vinegar (Acidity: 10%) | 18.0 | 18.0 | 18.0 | 18.0 | 18.0 |
| Granulated sugar | 5.0 | 5.0 | 5.0 | 5.0 | 5.0 |
| Salt | 3.0 | 3.0 | 3.0 | 3.0 | 3.0 |
| L-sodium glutaminate | 0.4 | 0.4 | 0.4 | 0.4 | 0.4 |
| Egg yolk (60 M filtration) | - | - | 3.0 | - | - |
| Xanthan gum | - | 0.05 | 0.1 | - | 0.05 |
| Modified pectin 3 | 0.6 | 0.4 | - | - | - |
| Unmodified pectin | - | - | - | 0.6 | 0.4 |
| Deionized water | 23.0 | 23.15 | 20.5 | 23.0 | 23.15 |
| Total | 100.0 | 100.0 | 100.0 | 100.0 | 100.0 |

### (1-1) Preparation of dressings (Comparative Example 13)

Xanthan gum and granulated sugar were mixed in powder form, and was added to deionized water, with stirring at 2000 rpm for 10 minutes at room temperature. Vinegar, salt and L-sodium glutaminate were added to the resultant, and was stirred at 1000 rpm for 5 minutes. After the addition of egg yolk, the mixture was stirred at 1000 rpm for 1 minute. Corn salad oil was gradually added to the resultant, and homogenized at 10000 rpm for 10 minutes using a homomixer to prepare dressing (Comparative Example 13). It should be noted that the egg yolk was filtered with a 60 mesh filter prior to use.

### (1-2) Preparation of dressings (Examples 9 and 10, Comparative Examples 14 and 15)

Modified Pectin 3 or unmodified pectin and granulated sugar were mixed in powder form and was added to deionized water with stirring at 2000 rpm at room temperature for 10 minutes. Vinegar, salt and L-sodium glutaminate were added to the resultant, and was stirred at 1000 rpm for 5 minutes. Corn salad oil was then gradually added to the resultant, and homogenized at 10000 rpm for 10 minutes using a homomixer, to prepare dressings (Examples 9 and 10, Comparative Examples 14 to 15).

### (2) Evaluation of Viscosity, Emulsifying activity, and Emulsion Stability

Each dressing prepared (Examples 9 and 10, Comparative Examples 13 to 15) was measured for viscosity, emulsifying activity, and emulsion stability according to the following method.

### (2-1) Viscosity

Upon storage at room temperature for 1 day, the viscosity of each dressing was determined at 20°C using a B-type rotational viscometer at a rotations speed of 60 rpm. The results are shown in Table 12.

**[Table 12]**

| | Viscosity (mPa·s) |
|---|---|
| Example 9 | 984 |
| Example 10 | 1186 |
| Comparative Example 13 | 1000 |
| Comparative Example 14 | 952 |
| Comparative Example 15 | 1122 |

As shown in Table 12, the viscosities of the dressing prepared using Modified Pectin 3 (Example 9) and the dressing prepared using unmodified pectin (Comparative Example 14) were comparable. Also, the viscosities of the dressing prepared using Modified Pectin 3 and xanthan gum (Example 10) and the dressing prepared using unmodified pectin and xanthan gum(Comparative Example 15) were equivalent. The viscosity of the dressing prepared using egg yolk and xanthan gum (Comparative Example 13) was 1000 mPa·s, and showed the intermediate value among the treatments.

### (2-2) Emulsifying activity and Emulsion Stability

Emulsifying properties of each dressing (Examples 9 to 10 and Comparative Examples 13 to 15) was evaluated by measuring the average particle diameters (50% volume mean diameter) of oil droplets using a laser diffraction particle-size-distribution analyzer (manufactured by Shimazu SALD-2100) upon storage at room temperature for 1 day or at 40 °C for one week.

The results are shown in Table 13. In order to measure the degree of change upon, percentage of increase (%) in the average particle diameter upon storage at 40°C for one week relative to that upon storage at room temperature for 1 day were calculated. The results are also shown in Table 13.

**[Table 13]**

| | Average particle diameter (µm) | | Percentage of increase in average particle diameter upon storage |
|---|---|---|---|
| | Upon storage at room temperature for 1 day | Upon storage at 40°C for one week | |
| Example 9 | 6.869 | 7.573 | 110% |
| Example 10 | 6.952 | 7.762 | 112% |
| Comparative Example 13 | 24.032 | 27.421 | 114% |
| Comparative Example 14 | 8.699 | 17.263 | 198% |
| Comparative Example 15 | 9.792 | 30.964 | 316% |

As is clear from Table 13, under each storage condition, the dressings prepared using Modified Pectin 3 (Examples 9 and 10) were smaller in average particle diameters in comparison with the dressings prepared using unmodified pectin (Comparative Examples 14 and 15). For example, upon storage at room temperature for 1 day, the average particle diameter of the oil droplets for the dressing of Example 9 corresponded to about 79% of that for Comparative Example 14. Upon storage at 40°C for 1 week, the average particle diameter of the oil droplets for the dressing of Example 9 corresponded to about 44% of that for the dressing of Comparative Example 14.

Further, for the dressings (Examples 9 and 10) prepared using Modified Pectin 3, the percentage of increase in particle diameter upon storage was lower, in comparison with the dressings prepared using unmodified pectin (Comparative Examples 14 and 15). Showing that the change upon storage was suppressed.

Although the change over time for the dressing of Comparative Example 13 was relatively small, it did not make sense because the average particle diameter was mach larger than any other treatment at the beginning (i.e, upon storage at room temperature for 1 day).

When xanthan gum was used in combination with pectin, for the dressing of Comparative Example 15 in which unmodified pectin was used as a pectin sauce, separation of oil droplets was observed upon storage at 40°C for 1 week. However, for the dressing of Example 10 in which Modified Pectin 3 was used as a pectin sauce, the separation was not observed, showing excellent emulsion stability (storage stability) similar to the dressing of Comparative Example 13 in which xanthan gum and egg yolk were incorporated.

The above results showed that Modified Pectin 3 has higher emulsifying activity and emulsion stability, particularly high emulsion stability, in comparison with unmodified pectin, in the presence or absence of xanthan gum.

Thus, since the modified pectin has both effects of emulsion activity of egg yolk and thickening and emulsion stabilizing of xanthan gum, the modified pectin alone can substitute egg yolk (mainly as an emulsifier) and xanthan gum (mainly as thickener and stabilizer), and the use of the modified pectin can substantially satisfy the functions demanded for emulsion compositions, such as dressing. Moreover, the presence of xanthan gum allows the preparation of a dressing (emulsion composition) having an improved excellent emulsion stability (storage stability). In other words, the use of modified pectin with or without xanthan gum allows preparation of high-quality dressings with excellent emulsion stability (storage stability) and textural attributes only from botanical without using animal ingredients, such as egg yolk.

According to the method of the present invention, the emulsifying activity, emulsion stability, heat resistance, and texture or mouthfeel of emulsion compositions (particular emulsion foods) can be notably improved when the modified pectin is used instead of untreated sugar beet pectin(unmodified pectin). The method of the present invention can provide emulsion compositions only from natural botanical sause without using animal ingredients, such as egg yolks, and chemically synthesized emulsifiers that have been conventionally used for the purpose of emulsification. Therefore, especially in emulsion foods, excessive intake of cholesterol can be prevented, and also manufacturing costs can be reduced. Moreover, since the method of the present invention can improve the heat resistance of emulsion compositions (in particular emulsion foods), it can contribute to obtain an emulsion composition whose emulsion state is not deteriorated even under heat, i.e., to the ease of production and thus the stability of the final product.

### BRIEF DESCRIPTION OF THE DRAWINGS

Fig. 1 shows the appearance for dressings upon storage at 60°C for 1 day to evaluate emulsion stability. From the left to right, the dressing prepared using egg yolk and xanthan gum (Comparative Example 1), the dressing prepared using unmodified pectin (Comparative Example 2), and the dressing prepared using Modified Pectin 1 (Example 1).
Fig. 2 shows the microscopies of emulsion particles for mayonnaises upon storage at 20°C for 1 week to evaluate emulsion stability. From the upper to lower, mayonnaise prepared using egg yolk (Comparative Example 3), mayonnaise prepared using unmodified pectin (Comparative Example 4), and mayonnaise prepared using Modified Pectin 1 (Example 2).
Fig. 3 shows the appearance for mayonnaises with heat treatment at 180°C for 3 minutes to evaluate heat-hesistance. From the upper to lower, the mayonnaise prepared using egg yolk(Comparative Example 3), the mayonnaise prepared using unmodified pectin (Comparative Example 4), and the mayonnaise prepared using Modified Pectin 1 (Example 2).
Fig. 4 shows the for view picture for coffee with milk upon storage at 60°C for two weeks to evaluate emulsion stability in terms of precipitate (left column) and white suspended matter (right column). From the upper to lower, coffee with milk (Comparative Example 5) prepared using an emulsifier, coffee with milk (Comparative Example 6) prepared using unmodified pectin, and coffee with milk (Example 3) prepared using Modified Pectin 1.
Fig. 5 shows the microscopies of the emulsion particles for custard creams upon storage at 20°C for 1 day to evaluate emulsion stability. From the upper to lower, custard cream prepared using whey protein isolate (Comparative Example 7), custard cream prepared using unmodified pectin (Comparative Example 8), and custard cream prepared using Modified Pectin 1 (Example 4).
Fig. 6 shows the appearance of the emulsion particles for custard creams with heat treatment at 200°C for 10 minutes to evaluate heat resistance. From the upper to lower, the custard cream prepared using whey protein isolate (Comparative Example 7), the custard cream prepared using unmodified pectin (Comparative Example 8), and the custard cream prepared using Modified Pectin 1 (Example 4).
Fig. 7 shows the appearance of butter creams to evaluate shape retention in terms of decorative cream flower production ability. From the upper to lower, butter cream prepared without using pectin (Comparative Example 9), butter cream prepared using unmodified pectin (Comparative Example 10), and butter cream prepared using Modified Pectin 1 (Example 5).
Fig. 8 shows the microscopies of dressings upon storage at room temperature for 1 day (left column) or at 40°C for 1 week (right column) to evaluate emulsifying activity and emulsion stability. From the upper to lower, dressing prepared using egg yolk and xanthan gum (Comparative Example 11), dressing prepared using unmodified pectin (Comparative Example 12), and dressings prepared using Modified Pectin 2 (Examples 6 and 7, the added amount of Modified Pectin was 0.3% by weight and 0.4% by weight, respectively).

## Claims

1. A method of preparing emulsion compositions comprising:
(a) homogenizing a modified pectin, in water systems, obtained by heating sugar beet pectin derived from sugar beet in powder form at a temperature of 50 to 150°C at a relative humidity of 20 to 90% for 1 to 48 hours;
(b) mixing the water dispersion of modified pectin obtained in step (a) with raw materials for emulsion compositions; and
emulsifying the mixture obtained in step (b).

2. A method of preparing emulsion compositions according to claim 1, wherein a modified pectin obtained by heating sugar beet pectin derived from sugar beet in powder form at a temperature of 60 to 150°C at a relative humidity of 50 to 90% for 5 to 48 hours is used as a modified pectin.

3. A method according to claim 1, which is a method for preparing oil-in-water type (O/W) emulsions, water-in-oil (W/O) emulsions, or multiple emulsified emulsions.

4. A method according to claim 1 wherein the emulsion composition is food.

5. A method according to claim 1, wherein the emulsion composition is any one selected from the group consisting of dressings, mayonnaises, coffee with milk, custards, and butter creams.

6. Emulsion composition prepared by a method of claim 1.

7. Emulsion composition according to claim 6, which is oil-in-water (O/W) emulsions, water-in-oil (W/O) emulsions, or multiple emulsified emulsions.

8. Emulsion composition according to claim 6, wherein the emulsion composition is food.

9. Emulsion composition according to claim 6, wherein the emulsion composition is any one selected from the group consisting of dressings, mayonnaises, coffee with milk, custards, and butter creams.

10. Use of water dispersions containing a modified pectin for preparing an emulsion composition;
the modified pectin being obtained by heating sugar beet pectin derived from sugar beet in powder form at a temperature of 60 to 150°C at a relative humidity 50 to 90% for 5 to 48 hours;
the water dispersions being obtained by homogenizing the modified pectin in water systems.

## Patentansprüche

1. Verfahren zur Herstellung von Emulsionszusammensetzungen, umfassend:
(a) Homogenisieren eines modifizierten Pektins in Wassersystemen, welches durch Erhitzen von Zuckerrübenpektin aus Zuckerrüben in Pulverform bei einer Temperatur von 50 bis 150°C und einer relativen Luftfeuchtigkeit von 20 bis 90% für 1 bis 48 Stunden erhalten wurde;
(b) Mischen der in Schritt (a) erhaltenen Wasserdispersion von modifiziertem Pektin mit Rohmaterialien für Emulsionszusammensetzungen; und
Emulgieren der in Schritt (b) erhaltenen Mischung.

2. Verfahren zur Herstellung von Emulsionszusammensetzungen nach Anspruch 1, wobei ein modifiziertes Pektin, welches durch Erhitzen von Zuckerrübenpektin aus Zuckerrüben in Pulverform bei einer Temperatur von 60 bis 150°C und einer relativen Luftfeuchtigkeit von 50 bis 90% für 5 bis 48 Stunden erhalten wurde, als modifiziertes Pektin verwendet wird.

3. Verfahren nach Anspruch 1, das ein Verfahren zur Herstellung von Emulsionen vom Öl-in-Wasser-Typ (O/W), Wasser-in-ÖI-Emulsionen (W/O) oder mehreren emulgierten Emulsionen ist.

4. Verfahren nach Anspruch 1, wobei die Emulsionszusammensetzung ein Lebensmittel ist.

5. Verfahren nach Anspruch 1, wobei die Emulsionszusammensetzung eine beliebige ist, ausgewählt aus der Gruppe, bestehend aus Dressings, Mayonnaisen, Kaffee mit Milch, Pudding und Buttercremes.

6. Emulsionszusammensetzung, hergestellt nach einem Verfahren nach Anspruch 1.

7. Emulsionszusammensetzung nach Anspruch 6, welche Öl-in-Wasser (O/W)-Emulsionen, Wasser-in-ÖI (W/O)-Emulsionen oder mehrere emulgierte Emulsionen ist.

8. Emulsionszusammensetzung nach Anspruch 6, wobei die Emulsionszusammensetzung ein Lebensmittel ist.

9. Emulsionszusammensetzung nach Anspruch 6, wobei die Emulsionszusammensetzung eine beliebige ist, ausgewählt aus der Gruppe, bestehend aus Dressings, Mayonnaisen, Kaffee mit Milch, Pudding und Buttercremes.

10. Verwendung von Wasserdispersionen, die ein modifiziertes Pektin enthalten, zur Herstellung einer Emulsionszusammensetzung;
wobei das modifizierte Pektin durch Erhitzen von Zuckerrübenpektin aus Zuckerrüben in Pulverform bei einer Temperatur von 60 bis 150°C und einer relativen Luftfeuchtigkeit von 50 bis 90% für 5 bis 48 Stunden erhalten wurde; wobei die Wasserdispersionen durch Homogenisieren des modifizierten Pektins in Wassersystemen erhalten wurden.

## Revendications

1. Procédé de préparation de compositions en émulsion, comprenant :
(a) l'homogénéisation d'une pectine modifiée, dans des systèmes aqueux, obtenue par chauffage de pectine de betterave sucrière dérivée de betterave sucrière sous forme pulvérulente à une température allant de 50 à 150°C à une humidité relative de 20 à 90 % pendant 1 à 48 heures ;
(b) le mélange de la dispersion aqueuse de la pectine modifiée obtenue à l'étape (a) avec des matières premières pour des compositions en émulsion ; et
l'émulsion du mélange obtenu à l'étape (b).

2. Procédé de préparation de compositions en émulsion selon la revendication 1, où une pectine modifiée obtenue par chauffage de pectine de betterave sucrière dérivée de betterave sucrière sous forme pulvérulente à une température allant de 60 à 150°C à une humidité relative de 50 à 90 % pendant 5 à 48 heures est utilisée comme pectine modifiée.

3. Procédé selon la revendication 1, qui est un procédé de préparation d'émulsions huile-dans-eau (H/E), d'émulsions eau-dans-huile (E/H) ou d'émulsions multiples.

4. Procédé selon la revendication 1, où la composition en émulsion est un aliment.

5. Procédé selon la revendication 1, où la composition en émulsion est d'un type choisi parmi les sauces, les mayonnaises, les cafés au lait, les crèmes anglaises et les crèmes au beurre.

6. Composition en émulsion préparée par un procédé selon la revendication 1.

7. Composition en émulsion selon la revendication 6, qui est une émulsion huile-dans-eau (H/E), une émulsion eau-dans-huile (E/H) ou une émulsion multiple.

8. Composition en émulsion selon la revendication 6, où la composition en émulsion est un aliment.

9. Composition en émulsion selon la revendication 6, où la composition en émulsion est d'un type choisi parmi les sauces, les mayonnaises, les cafés au lait, les crèmes anglaises et les crèmes au beurre.

10. Utilisation de dispersions aqueuses contenant une pectine modifiée pour la préparation d'une composition en émulsion ;
la pectine modifiée étant obtenue par chauffage de pectine de betterave sucrière dérivée de betterave sucrière sous forme pulvérulente à une température allant de 60 à 150°C à une humidité relative de 50 à 90 % pendant 5 à 48 heures ;
les dispersions aqueuses étant obtenues par homogénéisation de la pectine modifiée dans des systèmes aqueux.
